# EUROPEAN PATENT APPLICATION

(11) **EP 2 952 629 A1**
(43) Date of publication of application: **09.12.2015**
(21) Application number: 14171415.4
(22) Date of filing: 05.06.2014
(51) Int. Cl.: E01D 15/127, B66F 7/24

(54) **Vehicle for transporting a bridging apparatus**

(71) Applicant: Pearson Engineering Limited, Newcastle upon Tyne, NE15 6UX (GB)
(72) Inventor: Renwick, Peter, Newcastle upon Tyne, Tyne & Wear NE6 3QS (GB)
(74) Representative: Vinsome, Rex Martin

(57) **Abstract**

A bridge transporting vehicle (2) for transporting a bridge apparatus (10) is disclosed. The vehicle comprises a vehicle body (4) for supporting the bridge apparatus comprising a pair of bridge members (12) in a transport position on respective sides (6, 8) of the vehicle body, and a deploying mechanism (18) for moving the bridge members to a deployed position in contact with the ground.

## Description

The present invention relates to a vehicle for transporting an elongate object, and relates particularly, but not exclusively, to vehicles for transporting one or more elongate bridge elements to enable vehicles to cross trenches or other gaps.

Vehicles are known for transporting and deploying bridge elements for use in crossing trenches in military deployment situations. Such vehicles typically support a single bridge element on the roof of the vehicle during transport of the bridge element. This arrangement suffers from the drawback that the size and weight of the bridge element which can be transported is limited by the stability of the combined vehicle and bridge, stability from rolling excessively in one or other direction being reduced due to the increase in the height of the combined centre of gravity of the system. Bridge elements are also known to be transported on separate trailers. This arrangement suffers from the drawback that the system is no longer self contained, requiring either additional trailers or additional vehicles to support the primary vehicle. If the trailer is hitched directly to the primary vehicle then its mobility is reduced.

Preferred embodiments of the present invention seek to overcome one or more of the above disadvantages of the prior art.

According to an aspect of the present invention, there is provided a vehicle for transporting an elongate object, the vehicle comprising a vehicle body adapted to support at least one elongate object in a respective transport position on a side of said vehicle body, and deploying means for moving at least one said elongate object to a respective deployed position in contact with the ground.

By providing a vehicle body adapted to support at least one elongate object in a respective transport position on a side of said vehicle body, and deploying means for moving at least one said elongate object to a deployed position in contact with the ground, this provides the advantage of enabling larger elongate objects to be transported, since an elongate object can be transported on each side of the vehicle body (as opposed to a single elongate object on the vehicle roof)

The vehicle body may be adapted to support at least one said elongate object on each side thereof.

The vehicle body may be adapted to support a first said elongate object on a first side thereof and a second elongate object on a second side thereof, wherein the first and second elongate objects are interconnected by means of at least one connection member.

It will be appreciated by persons skilled in the art that the connection member may be rigid or flexible, or a hinge or linkage.

This provides the advantage of enabling the first and second elongate objects to be located correctly relative to each other and maintained in the correct relative position during deployment of the elongate objects such that the separation of the elongate objects corresponds to the separation of wheels or tracks of the vehicle, and the first and second elongate objects can be deployed as a single unit.

The deploying means may be adapted to engage at least one said connection member and cause said elongate objects to pivot relative to said vehicle body between a respective transport position adjacent a respective side of said vehicle body and said deployed position.

The deploying means may be adapted to pivot the elongate objects between a respective first orientation in which at least one said object rests on a respective edge thereof and a respective second orientation in which said elongate objects lie substantially flat on the ground.

The deploying means may comprise at least one recess and/or protrusion adapted to engage at least one respective protrusion and/or recess on at least one said elongate object.

At least one said recess and/or protrusion may be provided on a respective support member pivotably mounted to said vehicle body.

According to another aspect of the present invention, there is provided a bridging apparatus comprising a first elongate object and a second elongate object connected to said first elongate object by means of at least one connecting member.

The first and second elongate objects may be pivotably connected to the/or each said connecting member.

According to a further aspect of the present invention, there is provided a bridging apparatus having a body including at least one recess and/or protrusion adapted to engage at least one respective protrusion and/or recess on a vehicle as defined above to enable pivoting of the bridging apparatus relative to said vehicle body.

Preferred embodiments of the invention will now be described, by way of example only and not in any limitative sense, with reference to the accompanying drawings in which:-
Figures 1A to 1G show a deployment operation of a bridge transporting vehicle and bridge apparatus of a first embodiment of the present invention; and
Figures 2A to 2J show a deployment operation of a bridge transporting vehicle and bridge apparatus of a second embodiment of the present invention.

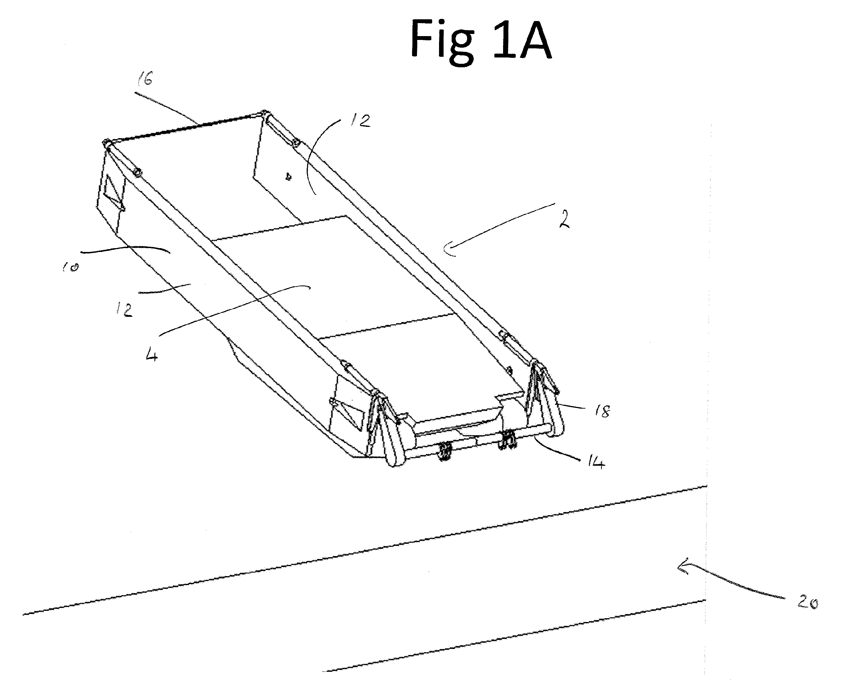

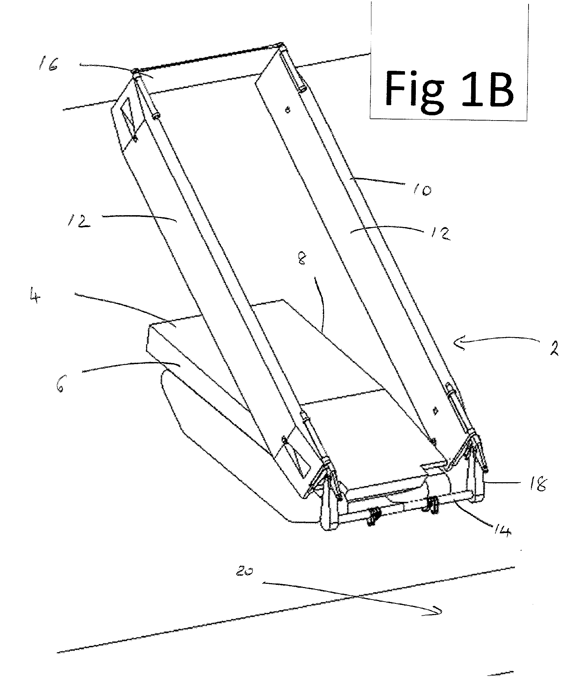

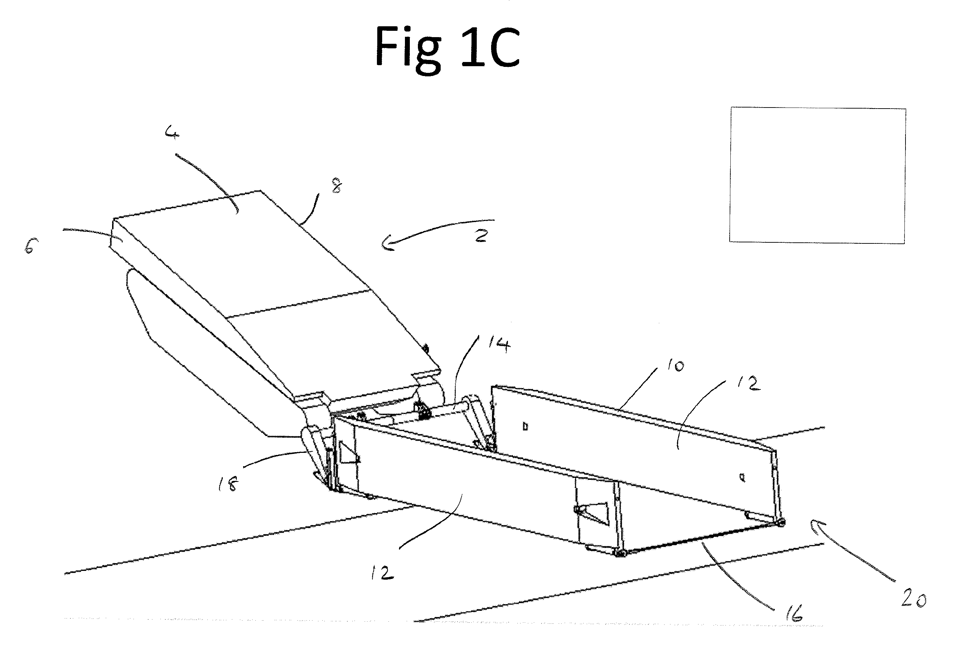

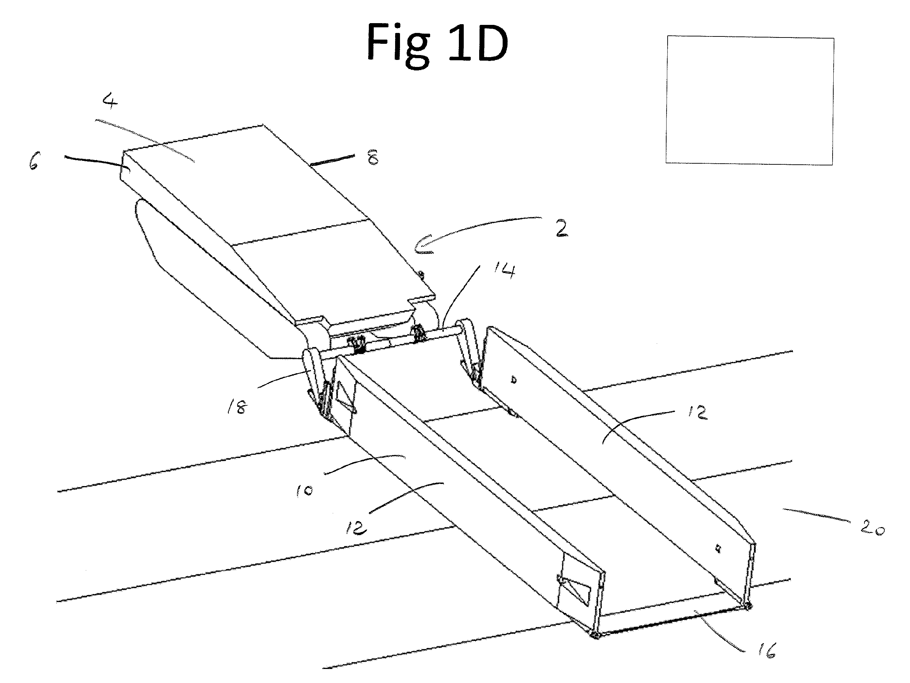

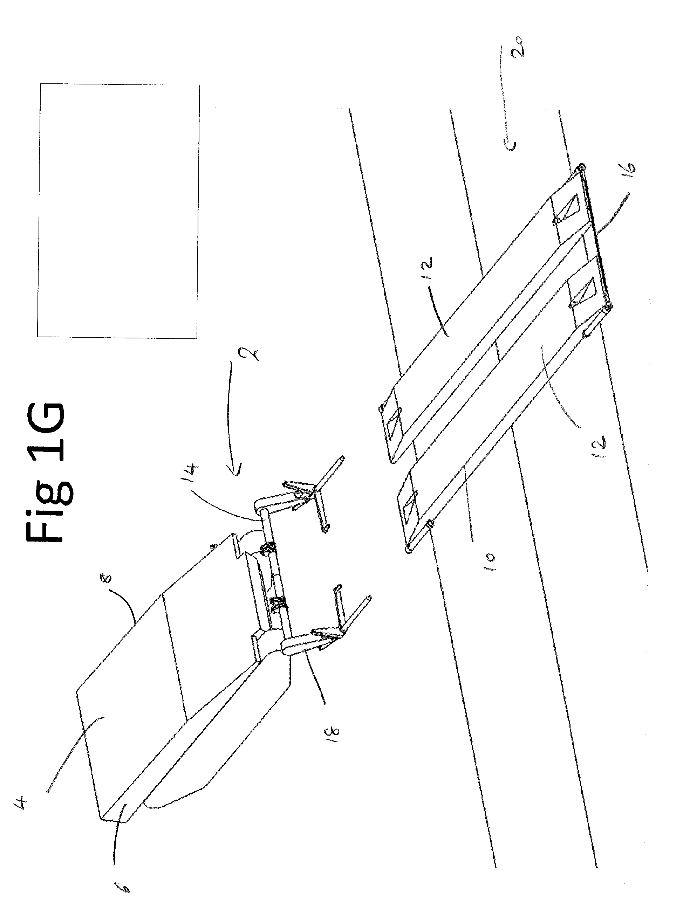

Referring to Figures 1A to 1G, a bridge transporting vehicle 2 has a vehicle body 4 having mounting portions (not shown) on lateral sides 6, 8 thereof for supporting a bridge apparatus 10 in a storage position as shown in Figure 1A. The bridge apparatus 10 comprises a pair of elongate bridge members 12 connected by connecting members 14, 16. The bridge apparatus 10 is supported by a deploying mechanism 18 of the vehicle 2 for rotating the bridge apparatus 10 about a longitudinal axis of the connecting member 14 from the storage position shown in Figure 1A through the positions shown in Figures 1B and 1C to bring the bridge apparatus 10 into contact with the ground as shown in Figure 1D.

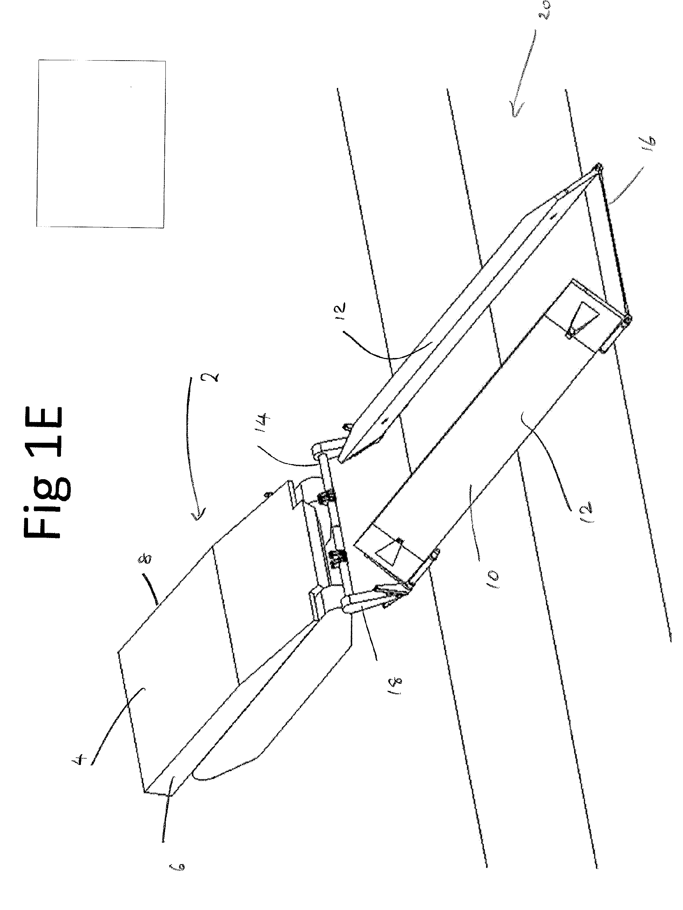

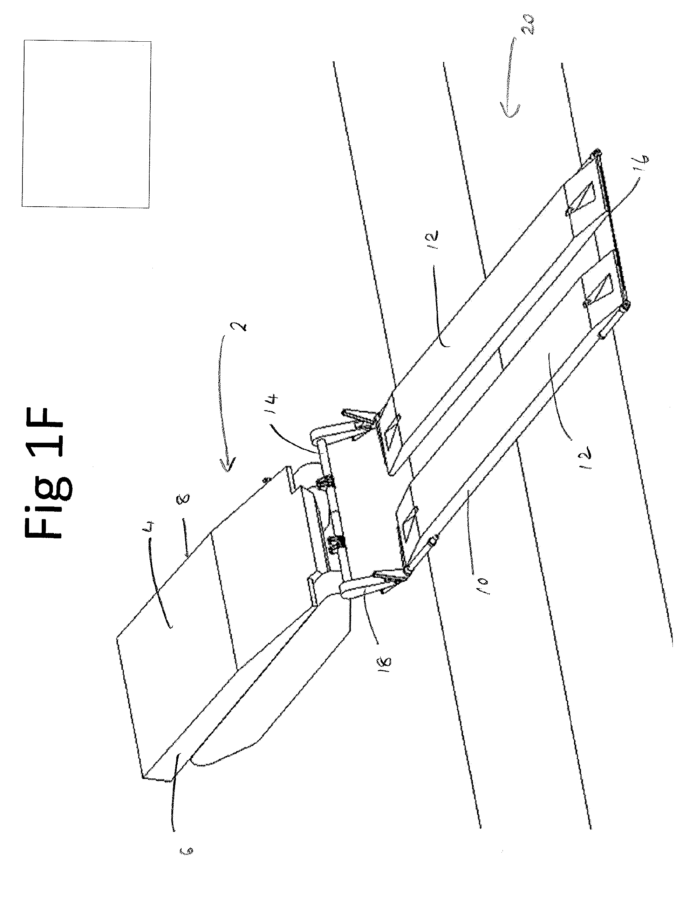

A locking mechanism (not shown) locks the bridge members 12 in a vertical orientation in the positions shown in Figures 1A to 1D. When the bridge apparatus 10 is in the position shown in Figure 1D, the locking mechanism is released so that the bridge members 12 can be pivoted through the position shown in Figure 1E to the position of Figure 1F, in which the bridge members 12 lie flat on the ground and bridge a trench 20. The locking mechanism is then completely released from the bridge apparatus 10 so that the vehicle body 4 can be separated from the bridge elements 12 to enable vehicles to be driven across the bridge elements 12 to cross the trench 20.

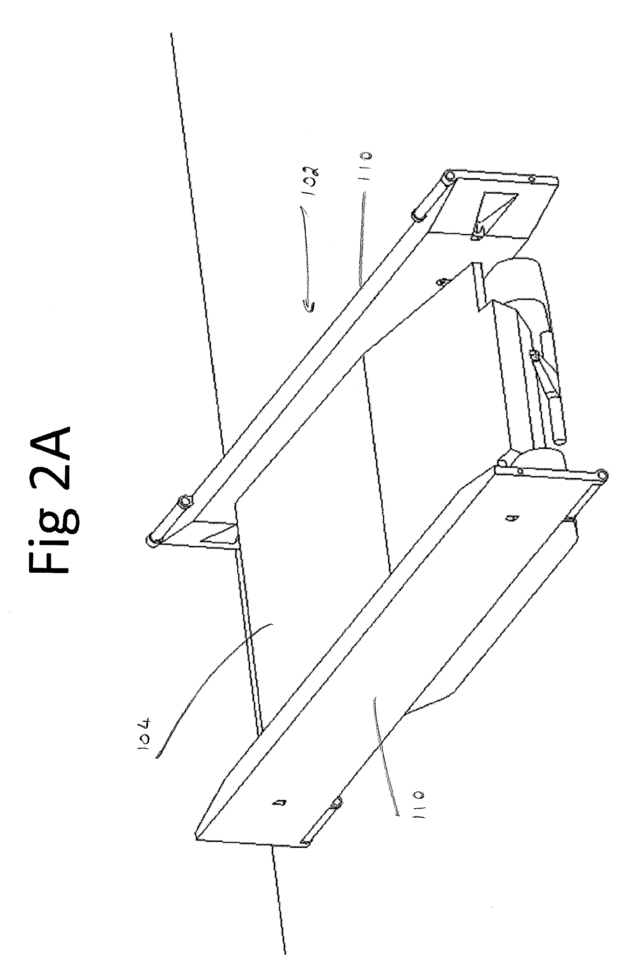

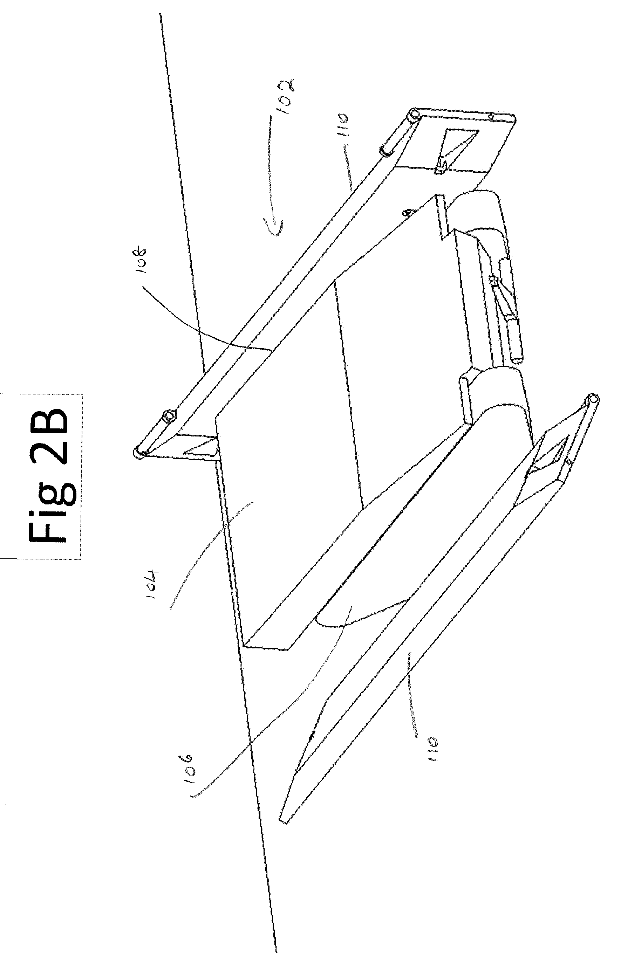

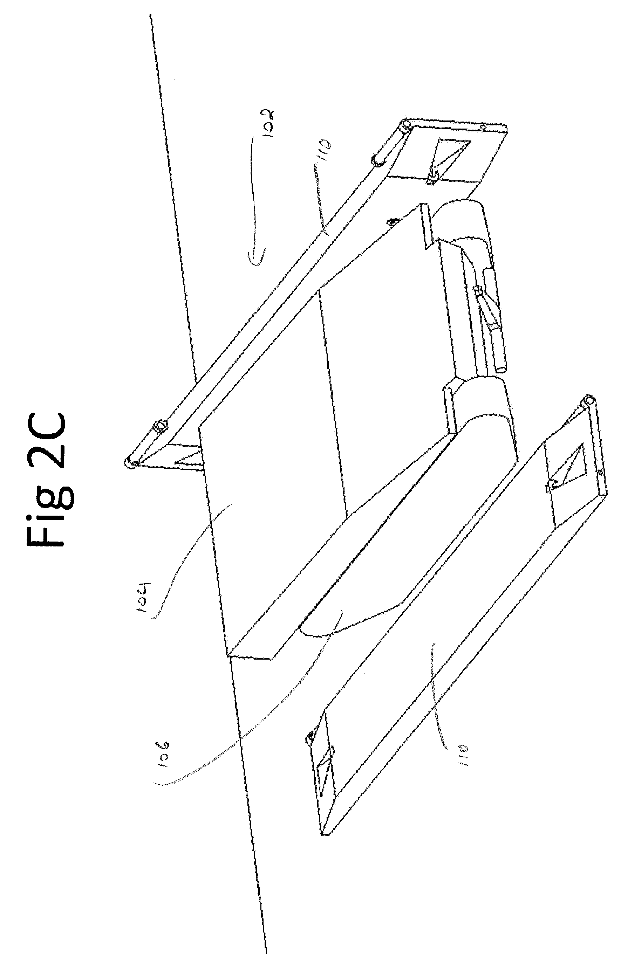

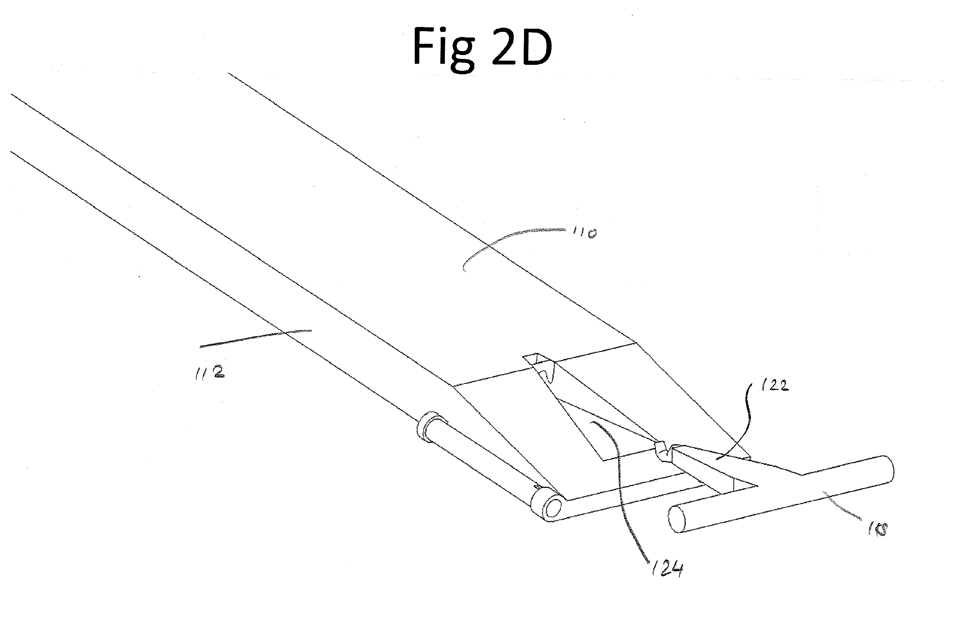

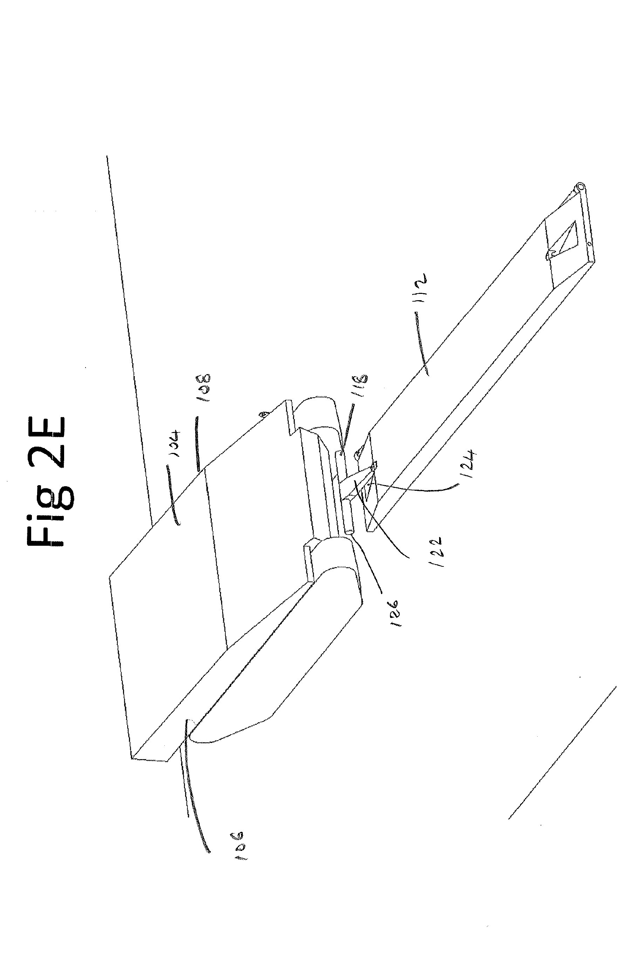

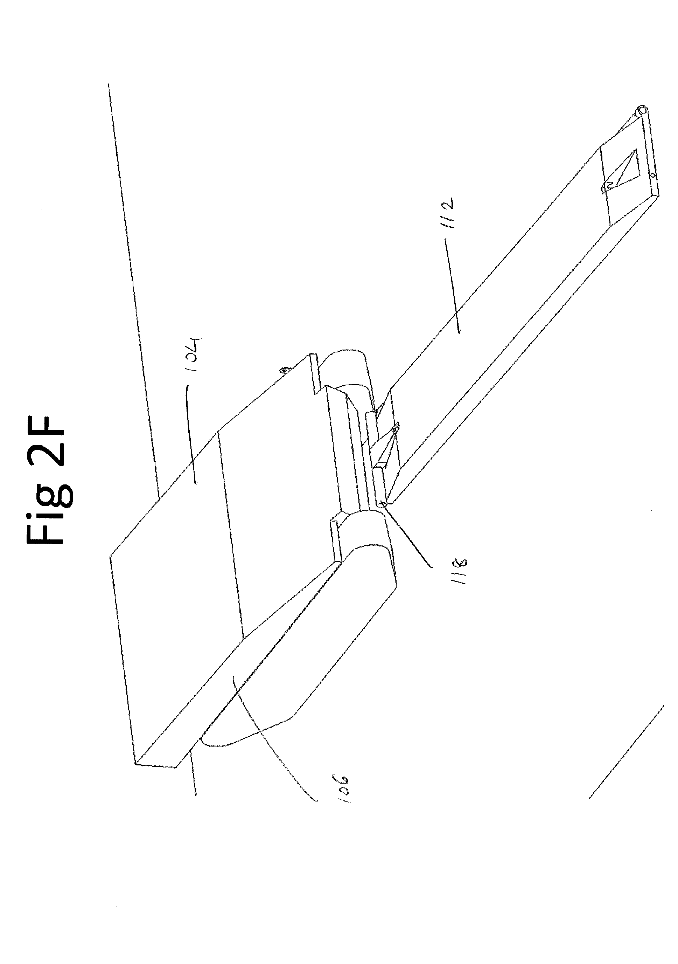

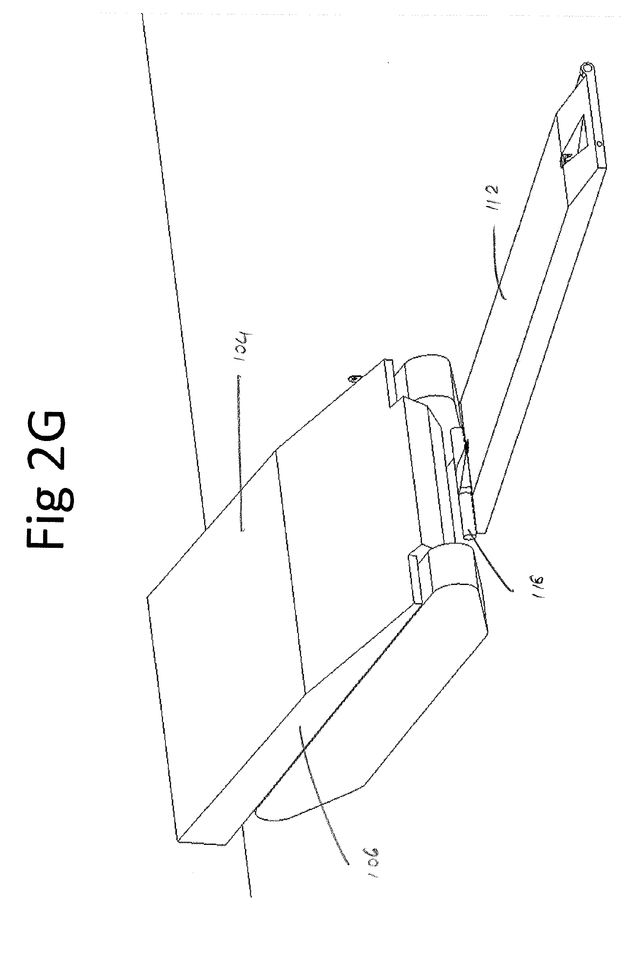

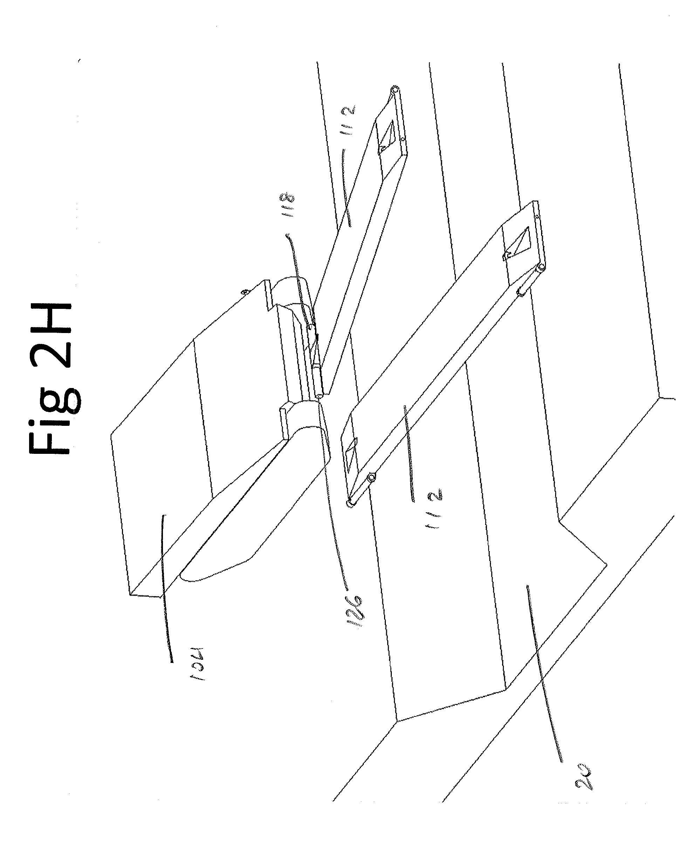

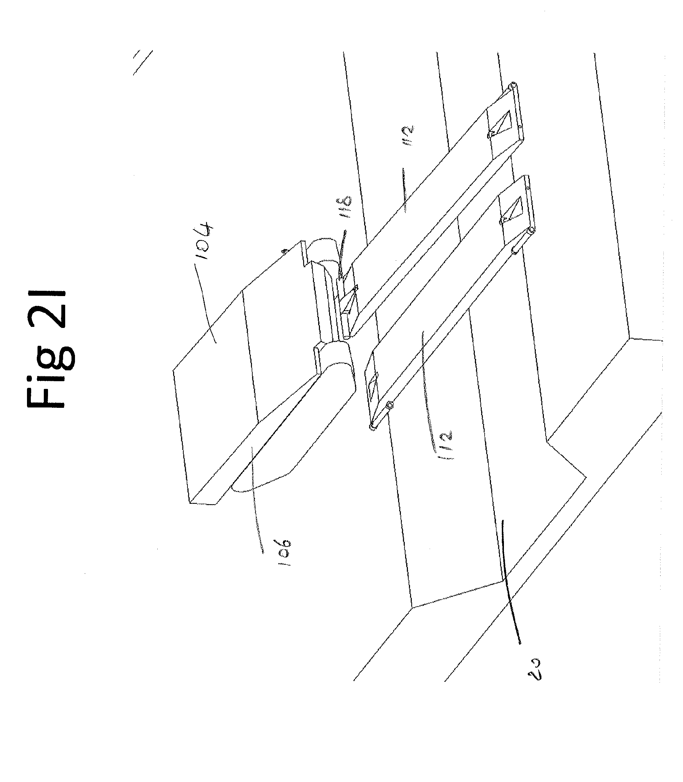

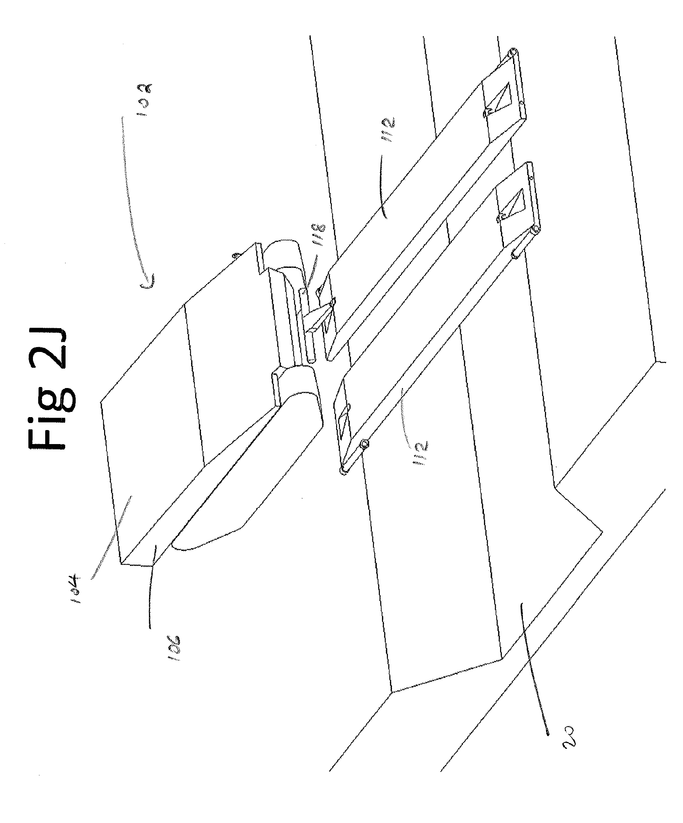

Referring to Figures 2A to 2J, in which parts common to the embodiment of Figures 1A to 1G are denoted by like reference numerals but increased by 100, a bridge transporting vehicle 102 of a second embodiment of the present invention has vehicle body 104 having mounting portions (not shown) on its lateral sides 106, 108 for supporting a bridge apparatus 110 comprising separate bridge elements 112, and a deploying mechanism 118 having an elongate protrusion 122 for engaging a corresponding recess 124 (Figure 2D) in each bridge element 112. In order to deploy the bridge apparatus 110, the bridge elements 112 are released from the sides 106, 108 of the vehicle body 104 to rest on the ground, and the vehicle 102 transports each bridge element 112 by bringing the protrusion 122 of the deploying mechanism 118 into the recess 124 of each bridge element 112 and pivoting the deploying mechanism 118 upwards about a pivot axis 126 to lift the bridge element 112 from the ground and place the bridge element 112 in position over the trench 20.

It will be appreciated by persons skilled in the art that the above embodiments have been described by way of example only and not in any limitative sense, and that various alterations and modifications are possible without departure from the scope of the invention as defined by the appended claims.

## Claims

1. A vehicle for transporting an elongate object, the vehicle comprising a vehicle body adapted to support at least one elongate object in a respective transport position on a side of said vehicle body, and deploying means for moving at least one said elongate object to a respective deployed position in contact with the ground.

2. A vehicle according to claim 1, wherein the vehicle body is adapted to support at least one said elongate object on each side thereof.

3. A vehicle according to claim 2, wherein the vehicle body is adapted to support a first said elongate object on a first side thereof and a second elongate object on a second side thereof, wherein the first and second elongate objects are interconnected by means of at least one connection member.

4. A vehicle according to claim 3, wherein the deploying
means is adapted to engage at least one said connection member and cause said elongate objects to pivot relative to said vehicle body between a respective transport position adjacent a respective side of said vehicle body and said deployed position.

5. A vehicle according to claim 4, wherein the deploying means is adapted to pivot the elongate objects between a respective first orientation in which at least one said object rests on a respective edge thereof and a respective second orientation in which said elongate objects lie substantially flat on the ground.

6. A vehicle according to any one of the preceding claims, wherein the deploying means comprises at least one recess and/or protrusion adapted to engage at least one respective protrusion and/or recess on at least one said elongate object.

7. A vehicle according to claim 6, wherein at least one said recess and/or protrusion is provided on a respective support member pivotably mounted to said vehicle body.

8. A bridging apparatus comprising a first elongate object and a second elongate object connected to said first elongate object by means of at least one connecting member.

9. An apparatus according to claim 8, wherein the first and second elongate objects are pivotably connected to the/or each said connecting member.

10. A bridging apparatus having a body including at least one recess and/or protrusion adapted to engage at least one respective protrusion and/or recess on a vehicle according to any one of claims 1 to 7 to enable pivoting of the bridging apparatus relative to said vehicle body.
